# EUROPÄISCHE PATENTSCHRIFT

(11) **EP 2 584 272 B1**
(45) Veröffentlichungstag und Bekanntmachung des Hinweises auf die Patenterteilung: **11.05.2016**
(21) Anmeldenummer: 12178228.8
(22) Anmeldetag: 27.07.2012
(51) Int. Cl.: F24D 3/14

(54) **Verbindungsanordnung für ein Heizungssystem**
Agencement de connexion pour un système de chauffage
Connection assembly for a heating system

(30) Priorität: 20.10.2011 DE 102011116478
(43) Veröffentlichungstag der Anmeldung: 24.04.2013
(73) Patentinhaber: Viega GmbH & Co. KG, 57439 Attendorn (DE)
(72) Erfinder: Pilmeier, Reinhard, 94354 Haselbach (DE); Schneider, Andreas, 57413 Finnentrop (DE); Oischinger, Matthias, 94250 Achslach (DE)
(74) Vertreter: Cohausz & Florack

(56) Entgegenhaltungen:
- EP-A1- 0 961 083
- EP-A1- 1 719 954
- DE-A1- 3 317 131
- DE-C1- 19 912 922
- DE-U1- 8 026 697
- US-A1- 2009 217 605

## Beschreibung

Die vorliegende Erfindung betrifft eine Verbindungsanordnung für ein Heizungssystem, insbesondere Fußbodenheizungssystem, mit mindestens einem Rohrhalter und mit einem sich entlang einer geraden horizontalen Achse in dem Rohrhalter erstreckenden Rohrabschnitt eines Wärmetauscherrohrs, der von dem mindestens einen Rohrhalter form- und/oder kraftschlüssig gehalten wird, wobei der Rohrhalter einen Grundträger mit einer horizontal verlaufenden Oberseite und sich von der Oberseite erstreckende Vorsprünge aufweist, wobei die Vorsprünge Seitenwände mit Rohranlageflächen aufweisen, wobei mindestens zwei Seitenwände der Vorsprünge den Rohrabschnitt mit den Rohranlageflächen berühren und in einer vorgegebenen Rohrlage fixieren, wobei die Seitenwände mit den Rohranlageflächen derart im Rohrhalter angeordnet sind, dass der Rohrabschnitt in mehreren möglichen (alternativen) Rohrlagen form- und/oder kraftschlüssig gehalten werden kann, wobei sich der Rohrabschnitt in jeder der Rohrlagen entlang einer anderen geraden horizontalen Achse in dem Rohrhalter erstreckt, wobei das Verhältnis der Anzahl an Seitenwänden mit Rohranlageflächen zu der Anzahl an möglichen Rohrlagen kleiner als vier ist. Eine entsprechende Verbindungsanordnung ist beispielsweise aus der DE 80 26 697 U1 bekannt.

Das technische Gebiet der vorliegenden Erfindung betrifft Heizungssysteme für die Flächentemperierung, insbesondere Fußbodenheizungssysteme. Dabei sind aus dem Stand der Technik verschiedene Möglichkeiten bekannt, ein solches Heizungssystem aufzubauen.

Die im Weiteren als Stand der Technik beschriebenen Varianten haben gemein, dass auf einen Untergrund, beispielsweise einen Betonboden, zunächst eine plattenförmige Unterlage, beispielsweise eine Wärmedämmplatte und/oder eine Noppenplatte, aufgelegt wird, wobei auf der plattenförmigen Unterlage Wärmetauscherrohre verlaufen, die mit der plattenförmigen Unterlage fest verbunden sind. Der Aufbau kann nach oben hin schließlich von Estrich oder Spachtelmasse begrenzt sein. Grundsätzliche Unterschiede gibt es bei der Halterung der Rohre auf der plattenförmigen Unterlage.

Zum einen sind als plattenförmige Unterlagen sogenannte Noppenplatten bekannt, bei denen es sich um ein plattenförmiges Grundelement mit hervorstehenden Noppen handelt. Zwei benachbarte Noppen dienen dazu, einen Rohrabschnitt des Wärmetauscherrohrs zu halten. Solche Noppenplatten werden üblicherweise auf Wärmedämmplatten aufgelegt.

Es sind auch Noppenplatten bekannt, bei denen das Grundelement in der Mitte faltbar ist, das heißt um 180° umgeklappt werden kann. Eine solche Noppenplatte ist beispielsweise in der DE 20 2010 015 159 U1 beschrieben. Durch die Möglichkeit der Faltbarkeit sollen Transport und Lagerung vereinfacht werden. Auch diese faltbare Noppenplatte wird auf Wärmedämmplatten aufgelegt.

Grundsätzlich kann das Grundelement einer Noppenplatte auch aus einer Vielzahl von Segmenten bestehen, die kettengliedartig in horizontaler Richtung über ein Filmscharnier oder dergleichen miteinander verbunden sind, wie dies beispielsweise aus der DE 199 62 633 A1 bekannt ist. Das Vorsehen solcher zueinander schwenkbarer Segmente erlaubt es, die Noppenplatte aufzurollen, was ebenfalls Transport und Lagerung vereinfachen soll. Bei dieser Variante einer Noppenplatte bilden die Segmente eine wärmedämmende Schicht, die beispielsweise aus EPS-Hartschaum (expandierter Polystyrol-Hartschaum) besteht.

Bei allen drei zuvor beschriebenen Varianten sind die Noppen und das Grundelement einstückig ausgeführt, das heißt die Noppen und das Grundelement sind in einem Stück geformt.

Als weitere Varianten sind aus dem Stand der Technik als plattenförmige Unterlage ausrollbare Bahnen mit mehrfach rückseitig geschlitzter Wärmedämmung bekannt, das heißt ebenfalls Grundelemente aus einer Vielzahl von kettengliedartig miteinander verbundenen Segmenten, die aber keine Noppen aufweisen. Bei dieser Variante wird das zu befestigende Wärmetauscherrohr mit der Unterlage, das heißt mit der ausgerollten Bahn, mit Hilfe von gebogenen Haltenadeln bzw. -klammern verbunden. Die Haltenadeln werden mit Hilfe eines speziellen Werkzeugs, welches ein Magazin mit einer Vielzahl von Haltenadeln aufweist, über das Rohr gesetzt und in die Unterlage geschlagen bzw. geschossen. Bei diesem Verfahren zur Befestigung der Wärmetauscherrohre ist also zwingend immer ein Werkzeug sowie eine große Zahl an Halteklammern notwendig. Außerdem ist der Arbeitsaufwand relativ groß, da eine Person das Wärmetauscherrohr in der gewünschten Position halten und eine weitere Person das Werkzeug bedienen muss.

Aus dem Stand der Technik sind ferner Varianten bekannt, bei denen zur Fixierung der Wärmetauscherrohre anstelle von Noppen sogenannte Rohrhalter aus Kunststoff verwendet werden. Unter Rohrhaltern werden einzelne Elemente verstanden, die allein geeignet sind, einen Rohrabschnitt aufzunehmen und zu halten und diesen mit der plattenförmigen Unterlage, beispielweise einer Wärmedämmplatte, zu verbinden. Dazu weisen die Rohrhalter Aussparungen oder nutförmige Vertiefungen auf, die zwischen entsprechenden Vorsprüngen ausgebildet sind und in die ein Rohrabschnitt eingeklemmt oder eingeclipst wird. Dabei bilden die Seitenwände der Vorsprünge Rohranlageflächen aus, an denen die Außenseite des Rohrabschnitts mit den Vorsprüngen in Berührung kommt. Die Seitenwände der Vorsprünge sind beispielsweise leicht geneigt, so dass sich die jeweilige Aussparung bzw. Nut, die zwischen zwei benachbarten Vorsprüngen gebildet ist, nach unten hin weitet. Auf diese Weise wird ermöglicht, dass die Seitenwände das Rohr klemmend umgreifen. Eine Vielzahl solcher Halter ist beispielsweise gemäß der DE 35 43 688 A1 auf eine 0,1 bis 0,5 mm dicke Trägerfolie aufgeklebt. Eine solche Trägerfolie kann im aufgerollten Zustand bevorratet werden, wobei die Rohrhalter bereits mit der Folie verschweißt sind.

Bei dieser Variante verfügen die Rohrhalter über vier Vorsprünge bzw. vier entsprechende Vertiefungen, wobei immer je zwei Aussparungen entlang einer Achse, der Rohrmittelachse, koaxial zueinander verlaufen und wobei die zwei Achsen (Rohrmittelachsen), die der Rohrhalter bildet, orthogonal zueinander sind, so dass zwei alternative Rohrlagen (Wege) für das einzulegende Rohr eingerichtet sind, die um 90° kreuzweise in der Horizontalen angeordnet sind. Die Verwendung solcher Rohhalter hat den Vorteil, dass sie ein Rohr alleine fixieren können, wohingegen bei der Verwendung von Noppen immer zwei Noppen zum Fixieren eines Rohres vorgesehen sein müssen. Bei der Einrichtung einer Fußbodenheizung oder dergleichen ist im Falle der Verwendung von Rohrhaltern die Anzahl an haltenden Elementen also geringer als im Falle der Verwendung von Noppen, wo immer zwei notwendig sind, um ein Rohr zu halten.

Schließlich gibt es gemäß noch einer weiteren Variante separate Rohrhalter, die individuell mit der zuvor ausgelegten plattenförmigen Unterlage, beispielsweise der Wärmedämmplatte, verklebt werden können. Solche separaten und noch nicht von vorne herein mit einer Trägerfolie oder Wärmedämmplatte verbundenen Rohrhalter sind beispielsweise in der DE 92 02 729 U1 beschrieben. Diese Rohrhalter verfügen über acht Aussparungen bzw. acht diese Aussparungen bildende Vorsprünge. Die Vorsprünge sind so angeordnet, dass von den Aussparungen immer zwei auf einer Achse (Rohrmittelachse) koaxial angeordnet sind. In diesem Fall sind vier Achsen jeweils sternförmig mit einem gemeinsamen Mittelpunkt in 45°-Schritten angeordnet, so dass vier alternative um 45° versetzte Rohrlagen (Wege) für das einzulegende Rohr eingerichtet sind.

Bei den beiden letztgenannten Varianten, die anstelle von Noppen Rohrhalter verwenden, sind immer je Achse (Rohrmittelachse) zwei Vorsprünge vorgesehen, die die Seitenwand der jeweiligen Aussparung formen. Mit anderen Worten beträgt das Verhältnis der Anzahl an Vorsprüngen zu der Anzahl an Achsen genau 2. Insbesondere bei der letztgenannten sternförmigen Variante müssen umlaufend eine Vielzahl von vertikalen Vorsprüngen ausgebildet sein, die die Seitenwände und entsprechend die Rohranlageflächen bilden. Dabei formt immer ein in einem horizontalen Schnitt pfeilförmiger Vorsprung zwei Seitenwände, und zwar die linke Seitenwand einer ersten Aussparung und die rechte Seitenwand einer im Uhrzeigersinn dazu benachbarten zweiten Aussparung. Jede Seitenwand verfügt über eine Rohranlagefläche, in der der Rohrabschnitt mit dem Vorsprung in Kontakt kommt.

Problematisch ist dabei, dass die bekannten Rohrhalter relativ groß sind, insbesondere eine relativ große Grundfläche haben, und entsprechend viel Platz einnehmen. Dies macht sich negativ bei Lagerung und Transport bemerkbar.

Die EP 1 719 954 A1 offenbart eine polymere Befestigungsschiene für die Aufnahme von Fluid führenden Leitungen, wobei die Befestigungsschiene ähnlich wie der eingangs genannte Stand der Technik einen Rohrhalter mit einem Grundträger und mehreren oberseitigen Vorsprüngen bildet. Im Unterschied zu dem Rohrhalter gemäß dem eingangs genannten Stand der Technik, der einen mittleren Vorsprung mit vier Seitenwänden und vier davon beabstandete Vorsprünge mit jeweils einer Seitenwand aufweist, weist der Rohrhalter gemäß der EP 1 719 954 A1 vier Vorsprünge mit jeweils zwei Seitenwänden auf.

Problematisch beim letztgenannten Stand der Technik ist, dass mit den vier Vorsprüngen, die jeweils zwei Seitenwände aufweisen, nur zwei mögliche Rohrlagen realisiert werden können. Dagegen können mit dem eingangs genannten Rohrhalter vier mögliche Rohrlagen realisiert werden, wobei dieser Rohrhalter aber ungleich komplizierter aufgebaut ist.

Ferner ist aus der US 2009/0217605 A1 eine Verbindungsanordnung für ein Heizungssystem bekannt, bei der auf einer Grundfläche mehrere Gruppierungen mit jeweils vier Vorsprüngen vorgesehen sind, wobei die Vorsprünge teilweise fünf Seitenwände aufweisen.

Es ist daher die Aufgabe der vorliegenden Erfindung, eine Verbindungsanordnung mit einem Rohrhalter und einem Wärmetauscherrohr sowie einen entsprechenden Rohrhalter zu schaffen, womit bei einem möglichst einfachen Aufbau möglichst geringe Abmessungen gewährleistet sind.

Die zuvor hergeleitete und aufgezeigt Aufgabe wird gemäß einer ersten Lehre der vorliegenden Erfindung bei einer Verbindungsanordnung der eingangs genannten Art gelöst durch die Merkmale des kennzeichnenden Teils von Patentanspruch 1.

Die erfindungsgemäße Verbindungsanordnung für ein Heizungssystem, insbesondere Fußbodenheizungssystem, ist mit mindestens einem Rohrhalter und mit einem sich entlang einer geraden horizontalen Achse in dem Rohrhalter erstreckenden Rohrabschnitt eines Wärmetauscherrohrs versehen, der von dem mindestens einen Rohrhalter form- und/oder kraftschlüssig gehalten wird, wobei der Rohrhalter einen Grundträger mit einer horizontal verlaufenden Oberseite und sich von der Oberseite erstreckende Vorsprünge aufweist, wobei die Vorsprünge Seitenwände mit Rohranlageflächen aufweisen, wobei mindestens zwei Seitenwände der Vorsprünge den Rohrabschnitt mit den Rohranlageflächen berühren und in einer vorgegebenen Rohrlage fixieren, wobei die Seitenwände mit den Rohranlageflächen derart im Rohrhalter angeordnet sind, dass der Rohrabschnitt in mehreren alternativen Rohrlagen form- und/oder kraftschlüssig gehalten werden kann, wobei sich der Rohrabschnitt in jeder der Rohrlagen entlang einer anderen geraden horizontalen Achse in dem Rohrhalter erstreckt, wobei das Verhältnis der Anzahl an Seitenwänden mit Rohranlageflächen zu der Anzahl an möglichen Rohrlagen kleiner als 4 ist.

Die erfindungsgemäße Verbindungsanordnung verfügt also nicht über Noppen, sondern über Rohrhalter, also Elemente, die allein geeignet sind, einen Abschnitt eines Wärmetauscherrohrs zu halten und an einer Unterlage zu befestigen. Der Rohrhalter verfügt über einen Grundträger, der mit seiner Unterseite an besagter Unterlage, beispielsweise einer Wärmedämmplatte oder einer Folie, befestigt werden kann, wie im Weiteren noch näher beschrieben wird. Zur Oberseite hin erstrecken sich mehrere Vorsprünge, wobei zwischen zwei benachbarten Vorsprüngen eine Aussparung gebildet wird, die als Aufnahme für das Rohr dient.

Im Unterschied zum Stand der Technik ist erfindungsgemäß jedoch eine gegenüber der Anzahl an möglichen Rohrlagen reduzierte Anzahl an von den Vorsprüngen gebildeten Seitenwänden und insbesondere an Vorsprüngen vorgesehen. So sind im Stand der Technik bei den bekannten Rohrhaltern entweder zwei mögliche Rohrlagen eingerichtet, wobei dann acht Seitenwände und vier Vorsprünge ausgebildet sind, um die beiden möglichen Rohrlagen zu bilden. Oder es sind vier mögliche Rohrlagen eingerichtet, wobei in diesem Fall immer zwingend acht Vorsprünge und immer 16 Seitenwände am Rohrhalter ausgebildet sind, um die vier möglichen Rohrlagen zu bilden. Das Verhältnis der Anzahl an Seitenwänden zu der Anzahl an möglichen Rohlagen ist also immer genau 4. Das Verhältnis der Anzahl der Vorsprünge zu der Anzahl an möglichen Rohrlagen ist immer genau 2.

Dagegen ist erfindungsgemäß das Verhältnis der Anzahl an Seitenwänden zu der Anzahl an möglichen Rohrlagen kleiner als 4, insbesondere kleiner als 3,5 und beträgt bevorzugt 3. Insbesondere ist erfindungsgemäß das Verhältnis der Anzahl der Vorsprünge, die die Seitenwände mit den Rohranlageflächen aufweisen, zu der Anzahl an möglichen Rohrlagen kleiner als 2, bevorzugt kleiner als 1,5 und beträgt besonders bevorzugt 1.

Mit anderen Worten wird erfindungsgemäß bewusst auf eine oder mehrere Seitenwände und insbesondere auf einen oder mehrere Vorsprünge je möglicher Rohrlage verzichtet, wodurch die Komplexität des Rohrhalters der Verbindungsanordnung gegenüber dem Stand der Technik reduziert wird, was letztlich auch geringere Abmessungen des Rohrhalters ermöglicht. Es ist erfindungsgemäß erkannt worden, dass bei gleicher Grundfläche des Rohrhalters weniger Seitenwände und insbesondere weniger Vorsprünge als im Stand der Technik benötigt werden und dennoch die Funktionalität des Rohrhalters voll erhalten bleibt, das heißt ein Rohrabschnitt die gleiche Anzahl an möglichen Rohrlagen wie im Stand der Technik sicher einnehmen kann. Es ergibt sich damit auch der Vorteil, dass im Vergleich zum Stand der Technik mit dem erfindungsgemäßen Rohrhalter die gleiche Anzahl an Rohrlagen auf kleinerer Grundfläche möglich ist, das heißt beispielsweise für vier Rohrlagen eine kleinere Grundfläche als im Stand der Technik benötigt wird. Durch den erfindungsgemäßen Verzicht auf Seitenwände und insbesondere Vorsprünge können die weiterhin vorhandenen Seitenwände bzw. Vorsprünge außerdem vergleichsweise größer dimensioniert werden und sind damit stabiler als die filigranen Vorsprünge gemäß Stand der Technik.

Wesentlich ist also, dass durch das erfindungsgemäße Verringern des Verhältnisses der Anzahl an Seitenwänden und gegebenenfalls Vorsprüngen zu der Anzahl an möglichen Rohrlagen im Vergleich zum Stand der Technik der Rohrhalter kleiner ausgeführt werden kann, wodurch sich einerseits Gewichtsvorteile ergeben und andererseits auch die Lagerung und der Transport vereinfacht werden, da eine Verbindungsanordnung mit einer rollbaren oder faltbaren Unterlage (beispielsweise Wärmedämmplatte) enger als bisher zusammengelegt werden kann. Wesentlich ist außerdem, dass trotz Verzichts auf Seitenwände und gegebenenfalls Vorsprünge im Vergleich zum Stand der Technik die Funktionalität eines Rohrhalters beim Einsatz in einer Verbindungsanordnung nicht verschlechtert wird, sondern der jeweilige Rohrabschnitt in allen vom Rohrhalter gebildeten möglichen Rohrlagen sicher gehalten werden kann. Es wurde also erfindungsgemäß erkannt, dass eine (im Vergleich zum Stand der Technik) Verringerung der Anzahl an Seitenwänden und gegebenenfalls Vorsprüngen nicht zwangsläufig zu einer verschlechterten Funktionalität eines Rohrhalters führen muss. So werden im Weiteren verschiedene Ausgestaltungen des erfindungsgemäß verwendeten Rohhalters erläutert, bei denen gewährleistet ist, dass die Wärmetauscherrohre bzw. Rohrabschnitte auch bei der erfindungsgemäßen Verbindungsanordnung sicher fixiert werden.

Grundsätzlich kann der Rohrabschnitt besonders dann sicher von dem Rohrhalter gehalten werden, wenn die vorhandenen Vorsprünge den Rohrabschnitt in jeder der möglichen Rohrlagen an möglichst vielen Stellen berühren. Dies erfolgt bei der erfindungsgemäßen Verbindungsanordnung insbesondere dadurch, dass jeder der Vorsprünge, die die Seitenwände mit den Rohranlageflächen aufweisen, mehr als zwei Seitenwände mit Rohranlageflächen aufweist. Indem jeder Vorsprung also zumindest drei Seitenwände aufweist, kann jeder Vorsprung zur Anlage des Rohrabschnitts nicht nur in zwei der möglichen Rohrlagen, sondern in zumindest drei der möglichen Rohrlagen dienen. Dies wiederum ermöglicht, dass zur Gewährleistung einer sicheren Fixierung des Rohrabschnitts in jeder der möglichen Rohrlagen maximal drei Vorsprünge, gegebenenfalls sogar nur zwei Vorsprünge, notwendig sind, die den Rohrabschnitt halten. Im Stand der Technik sind dagegen immer zwingend vier Vorsprünge in jeder möglichen Rohrlage notwendig, um den Rohrabschnitt zu halten.

Damit der Rohrabschnitt in jeder möglichen Rohrlage, die von dem Rohrhalter gebildet wird, mit möglichst wenigen Seitenwänden und Vorsprüngen sicher gehalten wird, verlaufen bei jedem Vorsprung die Seitenwände des Vorsprungs alle insbesondere in einer anderen Richtung. Wenn also jeder Vorsprung drei Seitenwände aufweist, verläuft jede der drei Seitenwände dieses Vorsprungs in einer anderen Richtung. Darüber hinaus ist es bevorzugt, wenn mindestens eine Seitenwand eines der Vorsprünge parallel zu der Seitenwand eines anderen der Vorsprünge, vorzugsweise mehrerer anderer der Vorsprünge, verläuft, um den Rohrabschnitt zwischen diesen parallel verlaufenden Seitenwänden zu fixieren.

Gemäß einer weiteren Ausgestaltung der erfindungsgemäßen Verbindungsanordnung hat mindestens eine Seitenwand mindestens eines der Vorsprünge einen geneigten Verlauf, das heißt einen Verlauf, der gegenüber der Horizontalen und gegenüber der Vertikalen angewinkelt ist. Wenn der geneigte Verlauf so gewählt ist, dass die Seitenwand in vertikaler Richtung abschnittsweise über dem Rohrabschnitt verläuft, ist gewährleistet, dass die besagte Seitenwand das Rohr klemmend umgreifen kann. Mit anderen Worten ermöglicht ein geneigter Verlauf einer oder mehrerer Seitenwände eine Fixierung des Rohrabschnitts in vertikaler Richtung nach oben hin, das heißt vom Grundträger weg.

Alternativ oder zusätzlich kann zu demselben Zweck, nämlich zur Gewährleistung einer vertikalen Fixierung des Rohrabschnitts, vorgesehen sein, dass mindestens eine Seitenwand an einer vom Grundträger vertikal beabstandeten Stelle mindestens einen rohrseitig hervorstehenden Abschnitt hat. Der hervorstehende Abschnitt kann beispielsweise von einer Auskragung oder einem Wulst gebildet werden, der zumindest an einer Seitenwand in horizontaler Richtung, das heißt parallel zur Oberseite des Grundträgers, verläuft. Die Auskragung oder der Wulst kann auch entlang mehrerer Seitenwände des jeweiligen Vorsprungs verlaufen und damit zumindest abschnittsweise um den Vorsprung herum verlaufen. Der hervorstehende Abschnitt kann aber auch von einer Nase oder einem Haken gebildet sein, der aus der jeweiligen Seitenwand rohrseitig vorspringt.

Wie bereits erläutert wurde, ist der in der erfindungsgemäßen Verbindungsanordnung verwendete Rohrhalter so ausgebildet, dass ein Rohrabschnitt eines Wärmetauscherrohrs verschiedene mögliche Rohrlagen einnehmen kann. Dabei verläuft jede Rohrlage entlang einer geraden horizontalen Achse, die der Mittelachse des Rohrabschnitts entspricht. Um nun auf besonders einfache Weise das erfindungsgemäß vorgesehene Verhältnis der Anzahl an Seitenwänden zu der Anzahl an möglichen Rohrlagen von weniger als 4 zu erreichen, kann vorgesehen sein, dass die Achsen (Rohrmittelachsen), die den möglichen Rohrlagen entsprechen, sich nicht alle am selben Punkt schneiden. Es können sich dabei durchaus mehr als zwei Achsen in einem Punkt schneiden, solange zumindest eine weitere Achse nicht durch diesen Schnittpunkt verläuft. Auf diese Weise wird bei einem Rohrhalter, der mehr als zwei Achsen und dementsprechend Rohrlagen bildet, insbesondere bei einem Rohrhalter, der mindestens vier Achsen und Rohrlagen bildet, ein nicht-sternförmiger Verlauf der Gesamtheit an Achsen erreicht. Gleichwohl kann der Rohrhalter durchaus auch, zumindest bezogen auf eine vertikale Ebene, spiegelsymmetrisch aufgebaut sein, was die Komplexität weiter reduziert und die Herstellung und Anwendung vereinfacht.

Gemäß einer weiteren Ausgestaltung der erfindungsgemäßen Verbindungsanordnung berührt der Rohrabschnitt in jeder möglichen Rohrlage beidseitig mindestens eine Seitenwand des Rohrhalters. "Beidseitig" meint auf jeder in horizontaler Richtung weisenden Rohrseite. Auf diese Weise ist gewährleistet, dass bei der erfindungsgemäßen Verbindungsanordnung der Rohrabschnitt optimal zumindest in horizontaler Richtung fixiert ist.

Es sind verschiedene Varianten denkbar, in denen der Rohrabschnitt mindestens eine Seitenwand des Rohrhalters beidseitig berührt.

So kann vorgesehen sein, dass in mindestens einer, insbesondere in mindestens zwei, der möglichen Rohrlagen der Rohrabschnitt auf einer Seite nur eine erste Seitenwand des Rohrhalters berührt. Mit anderen Worten ist der Rohrabschnitt zu einer Seite hin im Unterschied zum Stand der Technik zwingend nur mit einer Seitenwand und insbesondere nur mit einer Rohranlagefläche in Kontakt. Zur anderen Seite hin kann der Rohrabschnitt entweder auch nur mit einer Seitenwand oder Rohranlagefläche in Kontakt sein oder er ist mit mehreren, insbesondere zwei, Seitenwänden bzw. Rohranlageflächen in Kontakt.

Es ist also auch denkbar, dass in der/den möglichen Rohrlage(n), in der/den der Rohrabschnitt auf einer Seite nur eine erste Seitenwand berührt, der Rohrabschnitt auf der anderen Seite mindestens zwei weitere Seitenwände berührt, die insbesondere der ersten Seitenwand nicht (bezogen auf die Achse des Rohrabschnitts) gegenüberliegen.

Alternativ ist denkbar, dass in mindestens einer der möglichen Rohrlagen der Rohrabschnitt beidseitig nur eine Seitenwand des Rohrhalters berührt, wobei sich die beiden Seitenwände, die der Rohrabschnitt berührt, insbesondere (bezogen auf die Achse des Rohrabschnitts) gegenüberliegen.

Gemäß noch einer Variante kann vorgesehen sein, dass in mindestens einer der möglichen Rohrlagen der Rohrabschnitt beidseitig mindestens zwei Seitenwände berührt, wobei sich von den Seitenwänden, die der Rohrabschnitt berührt, mindestens vier, vorzugsweise alle, nicht (bezogen auf die Achse des Rohrabschnitts) gegenüberliegen.

Gemäß noch einer weiteren Ausgestaltung der erfindungsgemäßen Verbindungsanordnung ist der mindestens eine Rohrhalter direkt oder über eine Folie indirekt an einer Wärmedämmplatte befestigt. Mit einer Wärmedämmplatte ist insbesondere eine Platte aus EPS gemeint. Mit einer Folie ist insbesondere eine Kunststofffolie, beispielsweise eine Tiefziehfolie, einer Dicke von 0,05 bis 1 mm gemeint. Mit anderen Worten ist gemäß dieser Ausgestaltung vorgesehen, dass der mindestens eine Rohrhalter eine von der Oberseite abgewandte Unterseite hat, die parallel zur Oberseite verläuft, wobei der mindestens eine Rohrhalter mit seiner Unterseite an einer Wärmedämmplatte und/oder einer mit einer Wärmedämmplatte verbundenen oder verbindbaren Folie befestigt ist, insbesondere durch Aufkleben, Aufschweißen, Aufstecken, Vakuumziehen, Aufkletten und/oder Aufklammern. Alternativ kann der mindestens eine Rohrhalter auch einstückig mit der Wärmedämmplatte ausgeführt sein. Der Rohrhalter kann teilweise oder vollständig aus Kunststoff bestehen.

Die Wärmedämmplatte kann aus Segmenten bestehen, von denen benachbarte schwenkbar miteinander verbunden sind, beispielsweise über ein Folienscharnier. Dabei ist/sind mindestens ein Segment, bevorzugt mehrere Segmente, besonders bevorzugt alle Segmente, mit mindestens einem Rohrhalter der beschriebenen Art - direkt oder indirekt über eine Folie - versehen, wobei die Wärmedämmplatte insbesondere aufrollbar und/oder faltbar ist. Eine aufrollbare und/oder faltbare Einheit aus Wärmedämmplatte und Rohrhaltern oder aus Wärmedämmplatte, Folie und Rohrhaltern hat den Vorteil einer besonders einfachen Handhabung bei der Herstellung einer erfindungsgemäßen Verbindungsanordnung und ist auch besonders gut transportierbar und lagerbar.

Es gibt nun eine Vielzahl von Möglichkeiten, die erfindungsgemäße Verbindungsanordnung auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Fig. 1: eine Draufsicht auf einen Rohrhalter einer Verbindungsanordnung gemäß einem ersten Ausführungsbeispiel der vorliegenden Erfindung,
- Figuren 2a) bis d): die möglichen Rohrlagen einer erfindungsgemäßen Verbindungsanordnung unter Verwendung des Rohrhalters gemäß Fig. 1,
- Fig. 3a): eine perspektivische Ansicht des Rohrhalters gemäß Fig. 1,
- Fig. 3b): eine perspektivische Ansicht eines weiteren Ausführungsbeispiels eines Rohrhalters für eine erfindungsgemäße Verbindungsanordnung,
- Fig. 3c): eine perspektivische Ansicht noch eines weiteren Ausführungsbeispiels eines Rohrhalters für eine erfindungsgemäße Verbindungsanordnung,
- Fig. 4a): eine Draufsicht auf eine Verbindungsanordnung mit einer Wärmedämmplatte, einem Wärmetauscherrohr und mehreren Rohrhaltern gemäß Fig. 1 und
- Fig. 4b): eine Schnittansicht der Verbindungsanordnung gemäß Fig. 4a) entlang der Schnittlinie IVb-IVb.

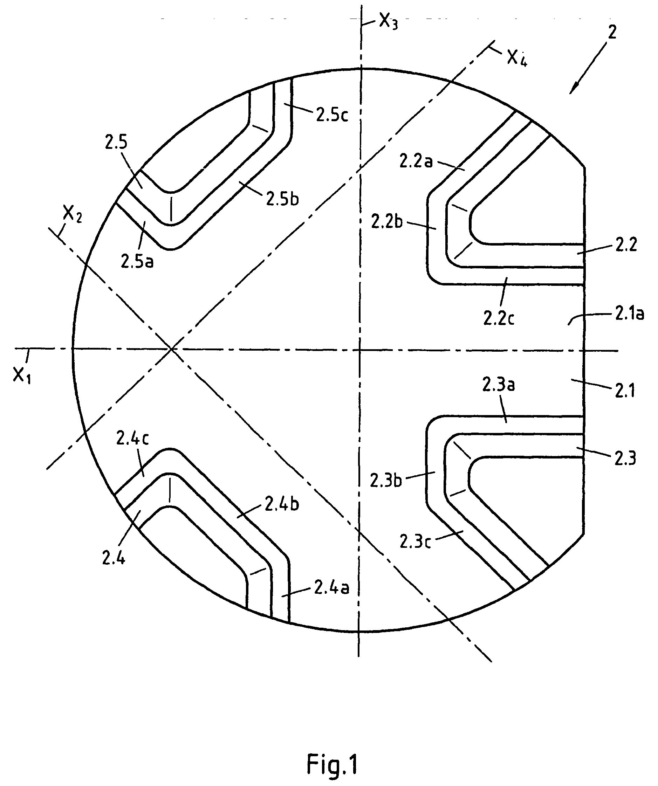

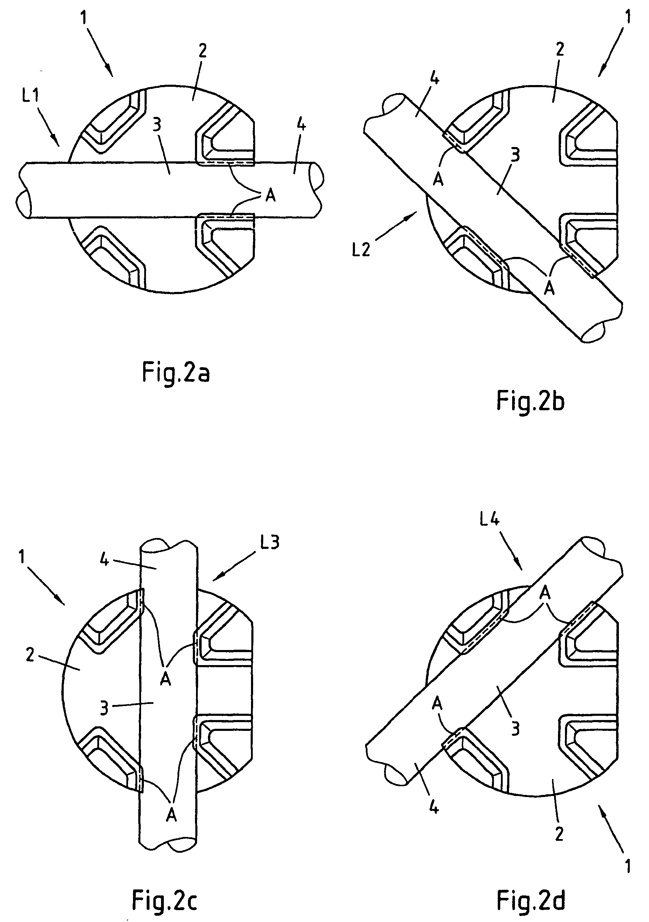

Fig. 1 zeigt in einer Draufsicht einen Rohrhalter 2 für eine Verbindungsanordnung 1, wie diese in den Figuren 2a) bis d) und 4a) und b) dargestellt ist.

Der Rohrhalter 2 bildet einen Raum aus, in dem sich entlang einer geraden horizontalen Achse X1, X2, X3 bzw. X4 in dem Rohrhalter 2 ein Rohrabschnitt 3 eines Wärmetauscherrohrs 4 erstrecken kann, wobei der Rohrhalter 2 derart geformt ist, dass der Rohrabschnitt 3 form- und/oder kraftschlüssig gehalten werden kann.

Der Rohrhalter 2 weist einen Grundträger 2.1 mit einer Oberseite 2.1a und einer Unterseite 2.1b auf, wobei die Oberseite 2.1a und die Unterseite 2.1b horizontal verläuft. Der Rohrhalter 2 weist ferner sich von der Oberseite 2.1a erstreckende Vorsprünge 2.2, 2.3, 2.4 und 2.5 auf, die jeweils Seitenwände mit Rohranlageflächen A bilden. Im Einzelnen bildet der Vorsprung 2.2 die drei Seitenwände 2.2a, 2.2b, 2.2c. Der Vorsprung 2.3 bildet wiederum die Seitenwände 2.3a, 2.3b und 2.3c. Der Vorsprung 2.4 bildet die Seitenwände 2.4a, 2.4b und 2.4c. Und der Vorsprung 2.5 bildet schließlich die Seitenwände 2.5a, 2.5b und 2.5c. Die Seitenwände aller Vorsprünge sind so ausgebildet, dass sie den später eingesetzten Rohrabschnitt 3 mit den Rohranlageflächen A berühren und in jeder der möglichen Rohrlagen, die in den Figuren 2a) bis d) dargestellt sind, fixieren.

So zeigt Fig. 2a) eine Rohrlage L1, bei der der Rohrabschnitt 3, wenn dieser in den Rohrhalter 2 gemäß Fig. 1 eingesetzt ist, entlang der ersten Achse X1 verläuft. Bei dieser Rohrlage L1 ist der Rohrabschnitt 3 durch die Rohranlageflächen A der Seitenwände 2.2c und 2.3a form- und/oder kraftschlüssig gehalten.

In den Figuren 2b) bis d) ist der Rohrabschnitt 3 mit demselben Rohrhalter 2 verbunden und wird ebenfalls form- und/oder kraftschlüssig gehalten, wobei sich der Rohrabschnitt 3 aber jedes Mal in einer anderen Rohrlage L2, L3 bzw. L4 entlang einer jeweils anderen geraden horizontalen Achse X2, X3 bzw. X4 in dem Rohrhalter 2 erstreckt.

Bei der in Fig. 2b) gewählten Rohrlage L2 erstreckt sich der Rohrabschnitt 3 entlang der Achse X2, derart, dass der Rohrabschnitt 3 die Rohranlageflächen A der Seitenwände 2.3c, 2.4b und 2.5a berührt und dadurch fixiert wird.

Bei der in Fig. 2c) dargestellten Rohrlage L3 erstreckt sich der Rohrabschnitt 3 entlang der Achse X3 und berührt die Rohranlageflächen A der Seitenwände 2.2b, 2.3b, 2.4a und 2.5c.

In der schließlich in Fig. 2d) dargestellten Rohrlage L4 erstreckt sich der Rohrabschnitt 3 entlang der Achse X4 und berührt die Rohranlageflächen A der Seitenwände 2.2a, 2.4c und 2.5b.

Wie anhand von Fig. 1 und den Figuren 2a) bis d) erkennbar ist, ist das Verhältnis der Anzahl an Seitenwänden mit Rohranlageflächen zu der Anzahl an möglichen Rohrlagen kleiner als 4 und im vorliegenden Ausführungsbeispiel genau 3. Mit anderen Worten ist der Rohrhalter 2 so ausgebildet, dass vier mögliche Rohrlagen L1, L2, L3 und L4 bei einer entsprechenden Verbindungsanordnung 1 eingerichtet sind, wobei zur Fixierung des Rohrabschnitts, um jede der möglichen Rohrlagen einnehmen zu können, zwölf Seitenwände ausgebildet sind.

Die zwölf Seitenwände werden von insgesamt vier Vorsprüngen gebildet, wobei jeder Vorsprung drei Seitenwände bildet. Auf diese Weise ist das Verhältnis der Anzahl der Vorsprünge zu der Anzahl an möglichen Rohrlagen kleiner als 2 und ist in dem vorliegenden Ausführungsbeispiel genau 1. Mit anderen Worten sind vier Vorsprünge mit Seitenwänden, die jeweils Rohranlageflächen A aufweisen, nötig, um die vier möglichen Rohrlagen L1, L2, L3 und L4 einzurichten.

Wie Fig. 1 ferner zeigt, verlaufen die Seitenwände jedes Vorsprungs 2.2, 2.3, 2.4 und 2.5 alle in eine andere Richtung. So verläuft in der gewählten Darstellung die Seitenwand 2.2a des Vorsprungs 2.2 in diagonaler Richtung, die daran anschließende Seitenwand 2.2b in einem Winkel von 135° zu der Seitenwand 2.2a und schließlich die sich wiederum an die Seitenwand 2.2b anschließende Seitenwand 2.2c in einem Winkel von 90° zu der Seitenwand 2.2b.

Der Vorsprung 2.3 mit den drei Seitenwänden 2.3a, 2.3b und 2.3c ist bezogen auf die Achse X1 spiegelsymmetrisch zu dem Vorsprung 2.2 mit den Seitenwänden 2.2a, 2.2b und 2.2c angeordnet.

Die Seitenwand 2.4a des Vorsprungs 2.4 verläuft parallel zu den Seitenwänden 2.3b und 2.2b, wobei sich die weitere Seitenwand 2.4b in einem Winkel 135° an die Seitenwand 2.4a anschließt und wobei sich schließlich die Seitenwand 2.4c in einem Winkel von 90° an die Seitenwand 2.4b anschließt.

Die Form des Vorsprungs 2.5 mit den drei Seitenwänden 2.5a, 2.5b und 2.5c ist bezogen auf die Achse X1 spiegelsymmetrisch zu der Form des Vorsprungs 2.4 mit den drei Seitenwänden 2.4a, 2.4b und 2.4c.

Ferner ist in den Figuren 1 und 2a) bis d) deutlich zu erkennen, dass ein eingesetzter Rohrabschnitt 3 zumindest beidseitig mindestens eine Seitenwand des Rohrhalters 2 berührt, und zwar derart, dass der Rohrabschnitt 3 nicht nur in einer horizontalen Richtung quer zur jeweiligen Rohrmittelachse X1, X2, X3 bzw. X4 fixiert ist, sondern auch gegen ein Verdrehen gegenüber dem Rohrhalter 2 um eine vertikale Achse gesichert ist. Dazu ist der Rohrabschnitt 3 in der Rohrlage L1 beidseitig mit nur einer einzigen Seitenwand 2.2c bzw. 2.3a in Kontakt, wobei sich diese beiden Seitenwände bezogen auf die Rohrmittelachse X1 gegenüberliegen. In der möglichen Rohrlage L2 ist der Rohrabschnitt 3 auf einer Seite mit nur einer einzigen Seitenwand 2.4b in Kontakt, wohingegen der Rohrabschnitt 3 auf der anderen Seite mit zwei Seitenwänden 2.3c und 2.5a in Kontakt ist, wobei sich diese drei den Rohrabschnitt 3 haltenden Seitenwände nicht gegenüberliegen. In der weiteren möglichen Rohrlage L4 wird der Rohrabschnitt 3 in gleicher Weise wie in der Rohrlage L2 gehalten, nämlich auf einer Seite von der Seitenwand 2.5b und auf der anderen Seite von den beiden dieser Seitenwand nicht gegenüberliegenden Seitenwänden 2.4c und 2.2a. In der möglichen Rohrlage L3 berührt der Rohrabschnitt 3 auf jeder Seite jeweils zwei Seitenwände, nämlich zur einen Seite hin die Seitenwände 2.4a und 2.5c und zur anderen Seite hin die Seitenwände 2.2b und 2.3b, wobei sich auch hier keine der Seitenwände gegenüberliegen.

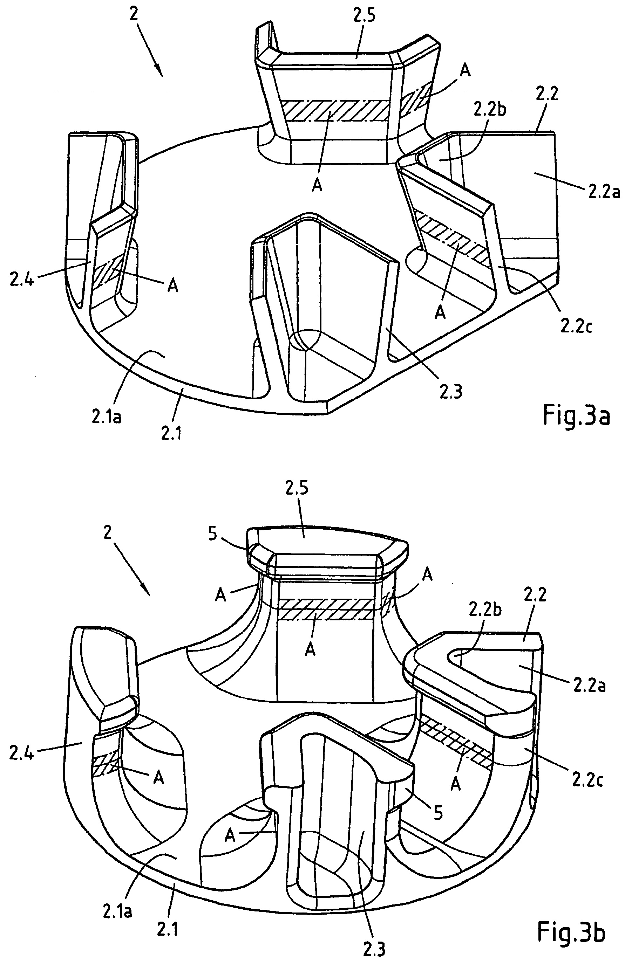

Fig. 3a) zeigt nun eine perspektivische Ansicht des Rohrhalters 2 aus Fig. 1. In dieser Ansicht sind die Rohranlageflächen A grafisch hervorgehoben. An diesen Rohranlageflächen A liegt der Rohrabschnitt 3 an, wenn dieser sich in einer der beschriebenen Rohrlagen L1, L2, L3 und L4 befindet.

In Fig. 3a) ist ferner erkennbar, dass alle Seitenwände sämtlicher Vorsprünge einen geneigten Verlauf haben, und zwar derart, dass in dem Fall, dass eine Verbindungsanordnung 1 aus Rohrabschnitt 3 und Rohrhalter 2 gebildet wird, ein Abschnitt jeder Seitenwand vertikal oberhalb des Rohrabschnitts 3 verläuft und den Rohrabschnitt 3 dadurch vertikal nach oben hin fixiert.

Fig. 3b) zeigt eine perspektivische Ansicht, die der in Fig. 3a) gewählten entspricht. Der in Fig. 3b) dargestellte Rohrhalter 2 unterscheidet sich jedoch von dem in Fig. 3a) dargestellten Rohrhalter 2 dadurch, dass die Seitenwände nicht geneigt sind, sondern an einer vom Grundträger 2.1 vertikal beabstandeten Stelle, nämlich an ihrem oberen Ende, einen rohrseitig hervorstehenden Abschnitt 5 aufweisen. In diesem Fall handelt es sich bei dem hervorstehenden Abschnitt 5 um einen Wulst bzw. eine Auskragung, der/die sich in horizontaler Richtung entlang aller Seitenwände eines jeden Vorsprungs 2.2, 2.3, 2.4 und 2.5 erstreckt. Dieser hervorstehende Abschnitt 5 dient ebenfalls dazu, einen eingesetzten Rohrabschnitt 3 in vertikaler Richtung nach oben hin zu fixieren.

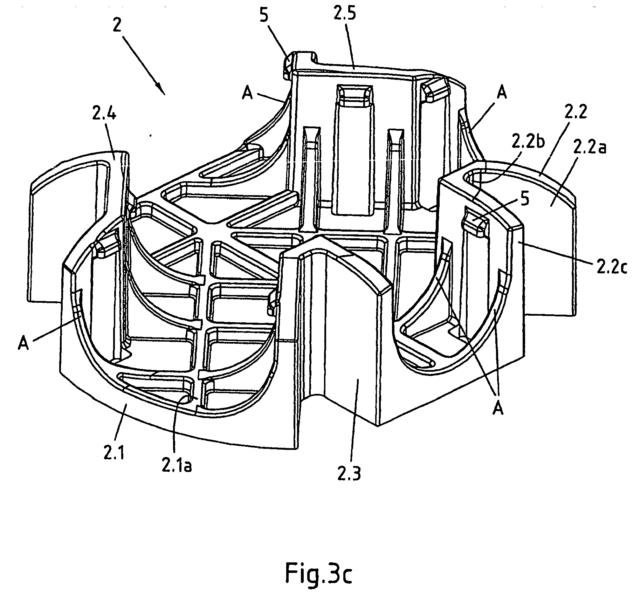

Fig. 3c) zeigt ebenfalls eine perspektivische Ansicht, die der in den Figuren 3a) und b) gewählten Ansicht entspricht, wobei sich der in Fig. 3c) dargestellte Rohrhalter 2 dadurch von den vorangehend beschriebenen Rohrhaltern 2 unterscheidet, dass hier als hervorstehender Abschnitt 5 an jeder Seitenwand eine rohrseitige Nase in Richtung des später eingesetzten Rohrabschnitts 3 vorspringt. Auch in diesem Fall dient der hervorstehende Abschnitt 5 jeweils zur vertikalen Fixierung des Rohrabschnitts 3 im eingesetzten Zustand.

Ein weiterer Unterschied ist, dass jede Seitenwand mehrere Rohranlagefläche A aufweist, die von gebogenen Stegen gebildet werden, deren Form an die äußere zylindrische Form des Rohrabschnitts 3 angepasst ist.

Schließlich ist noch ein weiterer Unterschied, dass bei dem Rohrhalter 2 gemäß Fig. 3c) die Oberseite 2.1a des Grundträgers 2.1 Verstärkungsrippen aufweist.

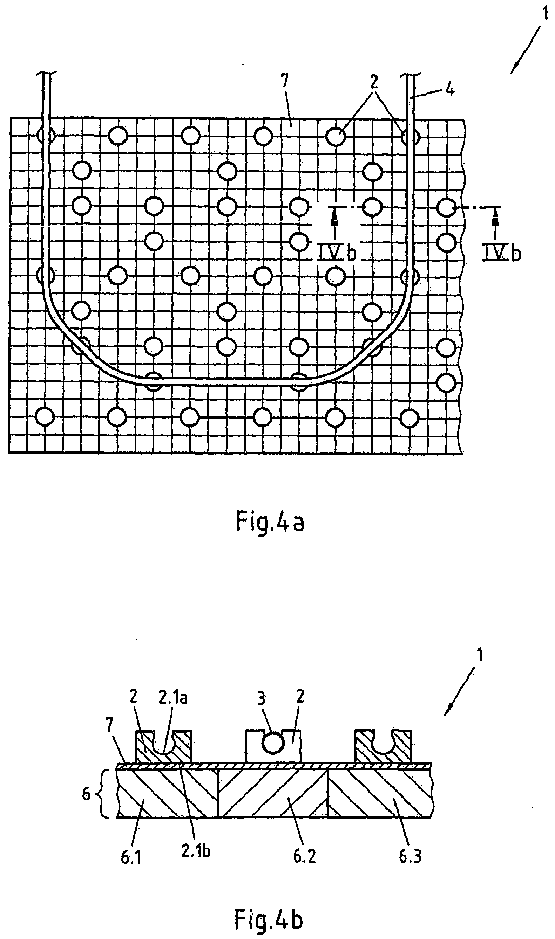

In Fig. 4a) ist eine Verbindungsanordnung 1 für ein Fußbodenheizungssystem dargestellt, wobei hier ein beispielhafter Verlauf eines Wärmetauscherrohrs 4 dargestellt ist. Das Wärmetauscherrohr 4 ist von mehreren Rohrhaltern 2, wie sie beispielsweise in Fig. 1 dargestellt sind, fixiert. Bei dem gewählten Verlauf des Wärmetauscherrohrs 4 ist erkennbar, dass das Wärmetauscherrohr 4 in unterschiedlichen Richtungen durch die einzelnen Rohrhalter 2 verläuft. Die Rohrhalter 2 brauchen dazu nicht individuell ausgerichtet sein, sondern können alle dieselbe Ausrichtung haben.

Fig. 4b) zeigt schließlich noch einen Schnitt entlang der Schnittlinie IVb-IVb in Fig. 4a). In der Schnittansicht ist erkennbar, dass die Verbindungsanordnung 1 zuunterst eine Wärmedämmplatte 6 aus mehreren schwenkbar miteinander verbundenen Segmenten 6.1, 6.2 und 6.3 aufweist, sowie auf der Wärmedämmplatte 6 eine mit dieser verklebte Folie 7, auf der wiederum zuoberst die Rohrhalter 2 befestigt sind. Durch die Segmentierung der Wärmedämmplatte 6 kann die Verbindungsanordnung 1 aufgerollt werden und dadurch auf einfache Weise gelagert, transportiert und ausgelegt werden.

## Patentansprüche

1. Verbindungsanordnung (1) für ein Heizungssystem, insbesondere Fußbodenheizungssystem,
- mit mindestens einem Rohrhalter (2) und
- mit einem sich entlang einer geraden horizontalen Achse (X1,X2,X3,X4) in dem Rohrhalter (2) erstreckenden Rohrabschnitt (3) eines Wärmetauscherrohrs (4), der von dem mindestens einen Rohrhalter (2) form- und/oder kraftschlüssig gehalten wird,
- wobei der Rohrhalter (2) einen Grundträger (2.1) mit einer horizontal verlaufenden Oberseite (2.1a) und sich von der Oberseite (2.1a) erstreckende Vorsprünge (2.2,2.3,2.4,2.5) aufweist,
- wobei die Vorsprünge (2.2,2.3,2.4,2.5) Seitenwände (2.2a,2.2b,2.2c,2.3a,2.3b,2.3c,2.4a,2.4b,2.4c,2.5a, 2.5b,2.5c) mit Rohranlageflächen (A) aufweisen, wobei mindestens zwei Seitenwände (2.2a,2.2b,2.2c,2.3a,2.3b,2.3c,2.4a,2.4b,2.4c,2.5a, 2.5b,2.5c) der Vorsprünge (2.2,2.3,2.4,2.5) den Rohrabschnitt (3) mit den Rohranlageflächen (A) berühren und in einer vorgegebenen Rohrlage (L1,L2,L3,L4) fixieren,
- wobei die Seitenwände (2.2a,2.2b,2.2c,2.3a,2.3b,2.3c, 2.4a,2.4b,2.4c,2.5a,2.5b,2.5c) mit den Rohranlageflächen (A) derart im Rohrhalter (2) angeordnet sind, dass der Rohrabschnitt (3) in mehreren möglichen Rohrlagen (L1,L2,L3,L4) form- und/oder kraftschlüssig gehalten werden kann, wobei sich der Rohrabschnitt (3) in jeder der Rohrlagen (L1,L2,L3,L4) entlang einer anderen geraden horizontalen Achse (X1,X2,X3,X4) in dem Rohrhalter (2) erstreckt,
- wobei das Verhältnis der Anzahl an Seitenwänden (2.2a,2.2h,2.2c,2.3a,2.3b,2.3c,2.4a,2.4b,2.4c,2.5a,2.5b,2.5c) mit Rohranlageflächen (A) zu der Anzahl an möglichen Rohrlagen (L1,L2,L3,L4) kleiner als 4 ist,
**dadurch gekennzeichnet, dass** vier Vorsprünge (2.2,2.3,2.4,2.5) vorgesehen sind, die jeweils mehr als zwei Seitenwände (2.2a,2.2b,2.2c,2.3a,2.3b,2.3c,2.4a,2.4b, 2.4c,2.5a,2.5b,2.5c) mit Rohranlageflächen (A) aufweisen.

2. Verbindungsanordnung (1) nach Anspruch 1, **dadurch gekennzeichnet, dass** das Verhältnis der Anzahl an Seitenwänden (2.2a,2.2b,2.2c,2.3a,2.3b,2.3c,2.4a,2.4b, 2.4c,2.5a,2.5b,2.5c) mit Rohranlageflächen (A) zu der Anzahl an möglichen Rohrlagen (L1,L2,L3,L4) kleiner als 3,5 ist und bevorzugt 3 beträgt

3. Verbindungsanordnung (1) nach Anspruch 1 oder 2, **dadurch gekennzeichnet, dass** das Verhältnis der Anzahl der Vorsprünge (2.2,2.3,2.4,2.5), die die Seitenwände (2.2a,2.2b,2.2c,2.3a,2.3b,2.3c,2.4a,2.4b,2.4c,2.5a,2.5b, 2.5c) mit den Rohranlageflächen (A) aufweisen, zu derAnzahl an möglichen Rohrlagen (L1,L2,L3,L4) kleiner als 2 ist, bevorzugt kleiner als 1,5 ist und besonders bevorzugt 1 beträgt.

4. Verbindungsanordnung (1) nach einem der vorangehenden Ansprüche, **dadurch gekennzeichnet, dass** bei jedem Vorsprung (2.2,2.3,2.4, 2.5) die Seitenwände (2.2a,2.2b,2.2c,2.3a,2.3b,2.3c, 2.4a,2.4b,2.4c,2.5a,2.5b,2.5c) des Vorsprungs (2.2,2.3, 2.4,2.5) alle in einer anderen Richtung verlaufen.

5. Verbindungsanordnung (1) nach einem der vorangehenden Ansprüche, **dadurch gekennzeichnet, dass** mindestens eine Seitenwand (2.2a,2.2b,2.2c,2.3a,2.3b,2.3c,2.4a,2.4b,2.4c,2.5a,2.5b,2.5c) mindestens eines der Vorsprünge (2.2,2.3,2.4,2.5) einen geneigten Verlauf hat und/oder an einer vom Grundträger (2.1) vertikal beabstandeten Stelle mindestens einen rohrseitig hervorstehenden Abschnitt (5) hat.

6. Verbindungsanordnung (1) nach einem der vorangehenden Ansprüche, **dadurch gekennzeichnet, dass** in jeder möglichen Rohrlage (L1,L2,L3,L4) der Rohrabschnitt (3) beidseitig mindestens eine Seitenwand (2.2a,2.2b, 2.2c,2.3a,2.3b,2.3c,2.4a,2.4b,2.4c,2.5a,2.5b,2.5c) des Rohrhalters (2) berührt.

7. Verbindungsanordnung nach Anspruch 6, **dadurch gekennzeichnet, dass** in mindestens einer, insbesondere in mindestens zwei, der möglichen Rohrlagen (L1,L2,L3,L4) der Rohrabschnitt (3) auf einer Seite nur eine erste Seitenwand (2.4b,2.5b) des Rohrhalters (2) berührt.

8. Verbindungsanordnung (1) nach Anspruch 7, **dadurch gekennzeichnet, dass** in der/den möglichen Rohrlage(n) (L1,L2,L3,L4), in der/den der Rohrabschnitt (3) auf einer Seite nur eine erste Seitenwand (2.4b,2.5b) berührt, der Rohrabschnitt (3) auf der anderen Seite mindestens zwei weitere Seitenwände (2.3c,2.5a,2.2a,2.4c) berührt, die insbesondere der ersten Seitenwand (2.4b,2.5b) nicht gegenüberliegen.

9. Verbindungsanordnung (1) nach Anspruch 6, **dadurch gekennzeichnet, dass** in mindestens einer der möglichen Rohrlagen (L1,L2,L3,L4) der Rohrabschnitt (3) beidseitig nur eine Seitenwand (2.2c.2.3a) des Rohrhalters (2) berührt, wobei sich die beiden Seitenwände (2.2c,2.3a), die der Rohrabschnitt (3) berührt, insbesondere gegenüberliegen.

10. Verbindungsanordnung (1) nach Anspruch 6, **dadurch gekennzeichnet, dass** in mindestens einer der möglichen Rohrlagen (L1,L2,L3,L4) der Rohrabschnitt (3) beidseitig mindestens zwei Seitenwände (2.2b,2.3b,2.4a,2.5c) berührt, wobei sich von den Seitenwänden (2.2b,2.3b,2.4a,2.5c), die der Rohrabschnitt (3) berührt, mindestens vier, vorzugsweise alle, nicht gegenüberliegen.

11. Verbindungsanordnung (1) nach einem der vorangehenden Ansprüche, **dadurch gekennzeichnet, dass** der mindestens eine Rohrhalter (2) eine von der Oberseite (2.1a) abgewandte Unterseite (2.1b) hat, die parallel zur Oberseite (2.1a) verläuft, wobei der mindestens eine Rohrhalter (2) mit seiner Unterseite (2.1b) an einer Wärmedämmplatte (6) und/oder einer mit einer Wärmedämmplatte (6) verbundenen oder verbindbaren Folie (7) befestigt ist, insbesondere durch Aufkleben, Aufschweißen, Aufstecken, Vakuumziehen, Aufkletten und/oder Aufklammern.

12. Verbindungsanordnung (1) nach Anspruch 11, **dadurch gekennzeichnet, dass** die Wärmedämmplatte (6) aus Segmenten (6.1,6.2,6.3) besteht, von denen benachbarte schwenkbar miteinander verbunden sind, wobei mindestens ein Segment (6.1,6.2,6.3), bevorzugt mehrere Segmente (6.1,6.2,6.3), besonders bevorzugt alle Segmente (6.1,6.2,6.3), mit mindestens einem Rohrhalter (2) versehen sind, wobei die Wärmedämmplatte (6) insbesondere aufrollbar und/oder faltbar ist.

## Claims

1. A connection assembly (1) for a heating system, in particular an underfloor heating system,
- with at least one tube holder (2) and
- with a tube section (3) of a heat exchanger tube (4), which tube section extends along a straight horizontal axis (X1, X2, X3, X4) in said tube holder (2) and is held by the at least one tube holder (2) in a form-locking and/or force-locking manner,
- wherein the tube holder (2) has a base support (2.1) having a horizontally extending upper surface (2.1a) and projections (2.2, 2.3, 2.4, 2.5) extending from said upper surface (2.1a),
- wherein the projections (2.2, 2.3, 2.4, 2.5) have side walls (2.2a, 2.2b, 2.2c, 2.3a, 2.3b, 2.3c, 2.4a, 2.4b, 2.4c, 2.5a, 2.5b, 2.5c) having tube contact surfaces (A), wherein at least two side walls (2.2a, 2.2b, 2.2c, 2.3a, 2.3b, 2.3c, 2.4a, 2.4b, 2.4c, 2.5a, 2.5b, 2.5c) of the projections (2.2, 2.3, 2.4, 2.5) contact the tube section (3) with the tube contact surfaces (A) and fix it in a predefined tube position (L1, L2, L3, L4),
- wherein the side walls (2.2a, 2.2b, 2.2c, 2.3a, 2.3b, 2.3c, 2.4a, 2.4b, 2.4c, 2.5a, 2.5b, 2.5c) having the tube contact surfaces (A) are arranged in the tube holder (2) in such a manner that the tube section (3) can be held in a form-locking and/or force-locking manner in a plurality of possible tube positions (L1, L2, L3, L4), wherein, in each of the tube positions (L1, L2, L3, L4), the tube section (3) extends along a different straight horizontal axis (X1, X2, X3, X4) in the tube holder (2),
- wherein the ratio of the number of side walls (2.2a, 2.2b, 2.2c, 2.3a, 2.3b, 2.3c, 2.4a, 2.4b, 2.4c, 2.5a, 2.5b, 2.5c) having tube contact surfaces (A) to the number of possible tube positions (L1, L2, L3, L4) is less than 4,
**characterized in that** four projections (2.2, 2.3, 2.4, 2.5) are provided, each of which has more than two side walls (2.2a, 2.2b, 2.2c, 2.3a, 2.3b, 2.3c, 2.4a, 2.4b, 2.4c, 2.5a, 2.5b, 2.5c) having tube contact surfaces (A).

2. The connection assembly (1) according to claim 1, **characterized in that** the ratio of the number of side walls (2.2a, 2.2b, 2.2c, 2.3a, 2.3b, 2.3c, 2.4a, 2.4b, 2.4c, 2.5a, 2.5b, 2.5c) having tube contact surfaces (A) to the number of possible tube positions (L1, L2, L3, L4) is less than 3,5 and preferably is 3.

3. The connection assembly (1) according to claim 1 or 2, **characterized in that** the ratio of the number of projections (2.2, 2.3, 2.4, 2.5) which comprise the side walls (2.2a, 2.2b, 2.2c, 2.3a, 2.3b, 2.3c, 2.4a, 2.4b, 2.4c, 2.5a, 2.5b, 2.5c) having the tube contact surfaces (A) to the number of possible tube positions (L1, L2, L3, L4) is less than 2, preferably less than 1,5 and particularly preferably is 1.

4. The connection assembly (1) according to any one of the preceding claims, **characterized in that** at each projection (2.2, 2.3, 2.4, 2.5), the side walls (2.2a, 2.2b, 2.2c, 2.3a, 2.3b, 2.3c, 2.4a, 2.4b, 2.4c, 2.5a, 2.5b, 2.5c) of the projection (2.2, 2.3, 2.4, 2.5) all extend in a different direction.

5. The connection assembly (1) according to any one of the preceding claims, **characterized in that** at least one side wall (2.2a, 2.2b, 2.2c, 2.3a, 2.3b, 2.3c, 2.4a, 2.4b, 2.4c, 2.5a, 2.5b, 2.5c) of at least one of the projections (2.2, 2.3, 2.4, 2.5) extends with an inclination and/or has a section (5) projecting at the side of the tube at a position vertically spaced apart from the base support (2.1).

6. The connection assembly (1) according to any one of the preceding claims, **characterized in that** in each possible tube position (L1, L2, L3, L4), the tube section (3) contacts on both sides at least one side wall (2.2a, 2.2b, 2.2c, 2.3a, 2.3b, 2.3c, 2.4a, 2.4b, 2.4c, 2.5a, 2.5b, 2.5c) of the tube holder (2).

7. The connection assembly according to claim 6, **characterized in that** in at least one, in particular in at least two, of the possible tube positions (L1, L2, L3, L4), the tube section (3) contacts on one side only one first side wall (2.4b, 2.5b) of the tube holder (2).

8. The connection assembly (1) according to claim 7, **characterized in that** in the possible tube position(s) (L1, L2, L3, L4), in which the tube section (3) contacts on one side only one first side wall (2.4b, 2.5b), the tube section (3) contacts on the other side at least two further side walls (2.3c, 2.5a, 2.2a, 2.4c), which are in particular not situated opposite the first side wall (2.4b, 2.5b).

9. The connection assembly (1) according to claim 6, **characterized in that** in at least one of the possible tube positions (L1, L2, L3, L4), the tube section (3) contacts on both sides only one side wall (2.2c, 2.3a) of the tube holder (2), wherein the two sides walls (2.2c, 2.3a) contacted by the tube section (3) are in particular situated opposite one another.

10. The connection assembly (1) according to claim 6, **characterized in that** in at least one of the possible tube positions (L1, L2, L3, L4), the tube section (3) contacts on both sides at least two side walls (2.2b, 2.3b, 2.4a, 2.5c), wherein of the side walls (2.2b, 2.3b, 2.4a, 2.5c) contacted by the tube section (3) at least four, preferably all, are not situated opposite one another.

11. The connection assembly (1) according to any one of the preceding claims, **characterized in that** the at least one tube holder (2) has a lower surface (2.1b) which faces away from the upper surface (2.1a) and runs parallel to the upper surface (2.1a), wherein the at least one tube holder (2) is fastened with its lower surface (2.1b), in particular by glueing, welding, plugging, vacuum drawing, velcroing and/or clamping, to a heat insulation plate (6) and/or a foil (7) that is connected or connectable to a heat insulation plate (6).

12. The connection assembly (1) according to claim 11, **characterized in that** the heat insulation plate (6) is composed of segments (6.1, 6.2, 6.3) of which adjacent segments are pivotably connected to one another, wherein at least one segment (6.1, 6.2, 6.3), preferably a plurality of segments (6.1, 6.2, 6.3), particularly preferably all segments (6.1, 6.2, 6.3), are provided with at least one tube holder (2), wherein the heat insulation plate (6) is in particular rollable and/or foldable.

## Revendications

1. Agencement de liaison (1) pour un système de chauffage, en particulier un système de chauffage au sol,
- comprenant au moins un support de tube (2) et
- comprenant un tronçon du tube (3) d'un tube d'échangeur de chaleur (4) s'étendant le long d'un axe horizontal droit (X1, X2, X3, X4) dans le support de tube (2), qui est maintenu par complémentarité de forme et/ou adhérence de forces par l'au moins un support de tube (2),
- dans lequel le support de tube (2) présente un support de fond (2.1) avec une face supérieure horizontale (2.1a) et des saillies (2.2, 2.3, 2.4, 2.5) s'étendant depuis la face supérieure (2.1a),
- dans lequel les saillies (2.2, 2.3, 2.4, 2.5) présentent des parois latérales (2.2a, 2.2b, 2.2c, 2.3a, 2.3b, 2.3c, 2.4a, 2.4b, 2.4c, 2.5a, 2.5b, 2.5c) avec des surfaces de placement de tube (A), sachant qu'au moins deux parois latérales (2.2a, 2.2b, 2.2c, 2.3a, 2.3b, 2.3c, 2.4a, 2.4b, 2.4c, 2.5a, 2.5b, 2.5c) des saillies (2.2, 2.3, 2.4, 2.5) touchent le tronçon de tube (3) avec les surfaces de placement de tube (A) et le fixent dans une position de tube prédéfinie (L1, L2, L3, L4),
- dans lequel les parois latérales (2.2a, 2.2b, 2.2c, 2.3a, 2.3b, 2.3c, 2.4a, 2.4b, 2.4c, 2.5a, 2.5b, 2.5c) avec les surfaces de placement de tube (A) sont disposées de telle façon dans le support de tube (2), que le tronçon de tube (3) peut être maintenu dans plusieurs positions de tube possibles (L1, L2, L3, L4) par complémentarité de forme et/ou adhérence de forces, sachant que le tronçon de tube (3) s'étend dans chacune des positions de tube (L1, L2, L3, L4) le long d'un autre axe horizontal droit (X1, X2, X3, X4) dans le support de tube (2),
- sachant que le rapport du nombre de parois latérales (2.2a, 2.2b, 2.2c, 2.3a, 2.3b, 2.3c, 2.4a, 2.4b, 2.4c, 2.5a, 2.5b, 2.5c) avec des surfaces de placement de tube (A) au nombre de positions de tube possibles (L1, L2, L3, L4) est inférieur à 4,
**caractérisé en ce que** quatre saillies (2.2, 2.3, 2.4, 2.5) sont prévues qui présentent chacune plus de deux parois latérales (2.2a, 2.2b, 2.2c, 2.3a, 2.3b, 2.3c, 2.4a, 2.4b, 2.4c, 2.5a, 2.5b, 2.5c) avec des surfaces de placement de tube (A).

2. Agencement de liaison (1) selon la revendication 1, **caractérisé en ce que** le rapport du nombre de parois latérales (2.2a, 2.2b, 2.2c, 2.3a, 2.3b, 2.3c, 2.4a, 2.4b, 2.4c, 2.5a, 2.5b, 2.5c) avec des surfaces de placement de tube (A) au nombre de positions de tube possibles (L1, L2, L3, L4) est inférieur à 3,5 et est de 3 de préférence.

3. Agencement de liaison (1) selon la revendication 1 ou 2, **caractérisé en ce que** le rapport du nombre de saillies (2.2, 2.3, 2.4, 2.5) qui présentent les parois latérales (2.2a, 2.2b, 2.2c, 2.3a, 2.3b, 2.3c, 2.4a, 2.4b, 2.4c, 2.5a, 2.5b, 2.5c) avec les surfaces de placement de tube (A), au nombre de positions de tube possibles (L1, L2, L3, L4), est inférieur à 2, est inférieur à 1,5 de préférence et est de 1 de manière particulièrement préférée.

4. Agencement de liaison (1) selon l'une des revendications précédentes, **caractérisé en ce que** pour chaque saillie (2.2, 2.3, 2.4, 2.5), les parois latérales (2.2a, 2.2b, 2.2c, 2.3a, 2.3b, 2.3c, 2.4a, 2.4b, 2.4c, 2.5a, 2.5b, 2.5c) de la saillie (2.2, 2.3, 2.4, 2.5) vont toutes dans une autre direction.

5. Agencement de liaison (1) selon l'une des revendications précédentes, **caractérisé en ce qu'**au moins une paroi latérale (2.2a, 2.2b, 2.2c, 2.3a, 2.3b, 2.3c, 2.4a, 2.4b, 2.4c, 2.5a, 2.5b, 2.5c) d'au moins une des saillies (2.2, 2.3, 2.4, 2.5) a un tracé incliné et/ou a au moins un tronçon (5) en saillie côté tube en un endroit distant verticalement du support de fond (2.1).

6. Agencement de liaison (1) selon l'une des revendications précédentes, **caractérisé en ce que** dans chaque position de tube possible (L1, L2, L3, L4), le tronçon de tube (3) touche des deux côtés au moins une paroi latérale (2.2a, 2.2b, 2.2c, 2.3a, 2.3b, 2.3c, 2.4a, 2.4b, 2.4c, 2.5a, 2.5b, 2.5c) du support de tube (2).

7. Agencement de liaison (1) selon la revendication 6, **caractérisé en ce que** dans au moins une, en particulier dans au moins deux, des positions de tube possibles (L1, L2, L3, L4), le tronçon de tube (3) touche d'un côté uniquement une première paroi latérale (2.4b, 2.5b) du support de tube (2).

8. Agencement de liaison (1) selon la revendication 7, **caractérisé en ce que** dans la/les position(s) de tube possible(s) (L1, L2, L3, L4) dans laquelle/lesquelles le tronçon de tube (3) touche d'un côté uniquement une première paroi latérale (2.4b, 2.5b), le tronçon de tube (3) sur l'autre côté touche au moins deux autres parois latérales (2.3c, 2.5a, 2.2a, 2.4c), qui ne sont en particulier pas opposées à la première paroi latérale (2.4b, 2.5b).

9. Agencement de liaison (1) selon la revendication 6, **caractérisé en ce que** dans au moins une des positions de tube possibles (L1, L2, L3, L4), le tronçon de tube (3) touche des deux côtés uniquement une paroi latérale (2.2c, 2.3a) du support de tube (2), sachant que les deux parois latérales (2.2c, 2.3a) que le tronçon de tube (3) touche, sont en particulier opposées.

10. Agencement de liaison (1) selon la revendication 6, **caractérisé en ce que** dans au moins une des positions de tube possibles (L1, L2, L3, L4), le tronçon de tube (3) touche des deux côtés au moins deux parois latérales (2.2b, 2.3b, 2.4a, 2.5c), sachant que des parois latérales (2.2b, 2.3b, 2.4a, 2.5c) que le tronçon de tube (3) touche, au moins quatre, de préférence toutes, ne sont pas opposées.

11. Agencement de liaison (1) selon l'une des revendications précédentes, **caractérisé en ce que** l'au moins un support de tube (2) a une face inférieure (2.1b) détournée de la face supérieure (2.1a), qui est parallèle à la face supérieure (2.1a), sachant que l'au moins un support de tube (2) est fixé par sa face inférieure (2.1b) à une plaque d'isolation thermique (6) et/ou à un film (7) relié ou pouvant être relié à une plaque d'isolation thermique (6), en particulier par collage, soudage, emboîtage, vide, bande velcro et/ou fixation.

12. Agencement de liaison (1) selon la revendication 11, **caractérisé en ce que** la plaque d'isolation thermique (6) est composée de segments (6.1, 6.2, 6.3) desquels des segments voisins sont reliés pivotants entre eux, sachant qu'au moins un segment (6.1, 6.2, 6.3), de préférence plusieurs segments (6.1, 6.2, 6.3), particulièrement de préférence tous les segments (6.1, 6.2, 6.3), sont dotés d'au moins un support de tube (2), sachant que la plaque d'isolation thermique (6) peut en particulier être enroulée et/ou pliée.
